# EUROPEAN PATENT SPECIFICATION

(11) **EP 3 009 909 B1**
(45) Date of publication and mention of the grant of the patent: **21.06.2017**
(21) Application number: 14189170.5
(22) Date of filing: 16.10.2014
(51) Int. Cl.: G05D 23/24, G05D 23/19, F24D 19/10

(54) **Actuator means and heating system**
Aktuatormittel und Heizsystem
Système de chauffage et moyens d'actionnement

(43) Date of publication of application: 20.04.2016
(73) Proprietor: Danfoss A/S, 6430 Nordborg (DK)
(72) Inventor: Hollnagel, Mikkel Peter, 7100 Vejle (DK); Sørensen, Bent, 7190 Billund (DK); Boden, Sean, 21407 Deutsch Evern (DE)
(74) Representative: Knoblauch, Andreas

(56) References cited:
- DE-A1- 4 138 523

## Description

The present invention relates to actuator means for a heat exchanger valve, said actuator means comprising a thermally expandable medium in a closed volume acting on a plunger, heating means for heating said medium and control means controlling said heating means.

Furthermore, the present invention relates to a heating system comprising a heat source heating a heat transfer fluid, at least one heat exchanger connected to said heat source, said heat exchanger being provided with a valve controlling a flow of said heat transfer fluid through said heat exchanger, said valve being actuated by actuator means as mentioned above.

Actuator means of the kind mentioned above are known from DE 41 38 523 A1. The thermally expandable medium is heated by means of an electric resistor connected to a housing in which the thermally expandable medium is enclosed. The resistor is supplied with electric current. The supply of electric current is controlled by means of a controller. The controller detects the electrical resistance of the thermally expandable medium which changes with the temperature to determine the position of the plunger.

Such actuator means have the advantage that no optical or mechanical position sensors are necessary to get an information about the position of the plunger. However, the construction is somewhat complicated.

The object underlying the invention is to simplify the construction of such actuator means.

This object is solved in an actuator means of the kind mentioned above in that said heating means has a temperature depending electrical resistance value and said control means uses said resistance value for determining a stroke of said plunger.

Such an embodiment eliminates the necessity for establishing an additional measuring place for measuring the electrical resistance of the thermally expandable medium. The heating means heating said thermally expandable medium has a temperature which is direct related to the temperature of the thermally expandable medium. It is therefore sufficient to know the temperature of the heating means. This temperature can easily be detected by obtaining an information about the electrical resistance value of the heating means which is, for example, easily obtainable by measuring current flowing through the heating means and voltage applied to the heating means. The thermally expandable medium changes its volume depending on the temperature. When the temperature is higher, the thermally expandable medium increases in volume. Since the thermally expandable medium acts on the plunger, the plunger is shifted out of the closed volume. Therefore, when the temperature of the thermally expandable medium at a certain time is known, the volume of the thermally expandable medium at this time is known as well. When the volume at the time is known, the stroke of the plunger is known as well.

In a preferred embodiment said heating means is positioned in said closed volume. This makes it possible to have an even closer relation between the temperature of the heating means and the temperature of the thermally expandable medium.

In a further preferred embodiment said heating means is embedded in said medium. In this case the temperature of the heating means and the temperature of the medium are at least almost equal since all heat produced by the heating element is transferred to the thermally expandable medium.

In a preferred embodiment said heating means is a PTC-resistor. A PTC-resistor is a resistor having a resistance value increasing with increasing temperature.

Preferably said control means comprise an inner control loop and an outer control loop. The outer control loop receives a set point, for example the desired room temperature, and the actual room temperature, and generates a signal defining the stroke of the plunger of the actuator. The inner control loop is responsible only to adjust this stroke of the plunger. This simplifies the overall control of the actuator means.

Preferably at least one of said inner control loop and said outer control loop comprise a PI-controller.

Preferably said inner control loop controls said heating means by means of pulse width modulation. In other words, the heating means is supplied with current in certain parts of a period, and not supplied with current in the remaining parts of said period. The relation between the length of the current supply and the length of the period is often called "duty cycle". Therefore, just by determining the duty cycle, which can be done by the outer control loop, it is easy to adjust the stroke of the plunger.

The object is solved with a heating system having actuator means as described above.

The actuator means actuate a valve. The valve controls the flow of a heat transfer fluid through a heat exchanger. The heat exchanger can be, for example, a radiator, a radiant floor heating, a convector, etc. When the valve is opened, a larger flow of heat transfer fluid can flow through the heat exchanger. When the valve is moved in a direction towards a closed condition of the valve, the flow is decreased.

Preferably the heating system comprises at least two heat exchanger connected to said heat source, each heat exchanger being provided with a valve actuated by actuator means as described above, wherein said actuator means have common control means. In this way it is possible that the common control means takes in account a relation between different heat exchangers. Furthermore, it is possible to detect un-normal situations, for example a consumption of a major part of the heat transfer fluid by only one heat exchanger. This could be an indication for a faulty situation.

Preferably said control means performs a balancing of said heat exchangers. The control means can, for example, make sure that all heat exchangers are supplied with the same flow of heat transfer fluid or that the heat transfer fluid is shared between the heat exchangers in a predetermined ratio. In this case it is not necessary to perform a manual balancing of the heat exchangers which is often not made correctly.

In a preferred embodiment said control means comprise for each actuator means limitation means for limiting an opening degree of the valve. In this way the limitation means are used for limiting the maximum flow of heat transfer fluid through the valve. Such a limitation needs no longer be made mechanically thus simplifying the construction of the valve as well.

Preferably said actuator means are controlled by pulse width modulation, wherein said limiting means limits a duty cycle. This is a simple way for limiting the opening degree. When the duty cycle is limited to certain value, the thermally expandable medium can expand only to a limited volume which in turn limits the stroke of the plunger.

Preferably said limiting means is connected to a statistical filter, said statistical filter receiving historical data. For example, the values of the duty cycles of the path can be collected and stored in a statistical array. Based on these data the duty cycle can be reduced, for example, to distribute the heat transfer fluid to all heat exchangers. Said statistical filter can as well use statistical data of other actuator to make sure that the heat transfer fluid is distributed in a desired way.

Preferably said statistical filter receives an input of an outer control loop. The outer control loop produces, for example, a requested duty cycle which is, on one hand, supplied to the limiter and, on the other hand, forms the data harvest for statistical array which is inputted to the statistical filter.

Preferred embodiments of the invention will now be described in more detail with reference to the drawings, wherein:
- Fig. 1: is a schematic illustration of a heating system,
- Fig. 2: is a schematic illustration of actuator means,
- Fig. 3: is a schematic illustration of a first embodiment of control means,
- Fig. 4: is a schematic illustration of a second embodiment of control means, and
- Fig. 5: is a schematic illustration of a third embodiment of control means.

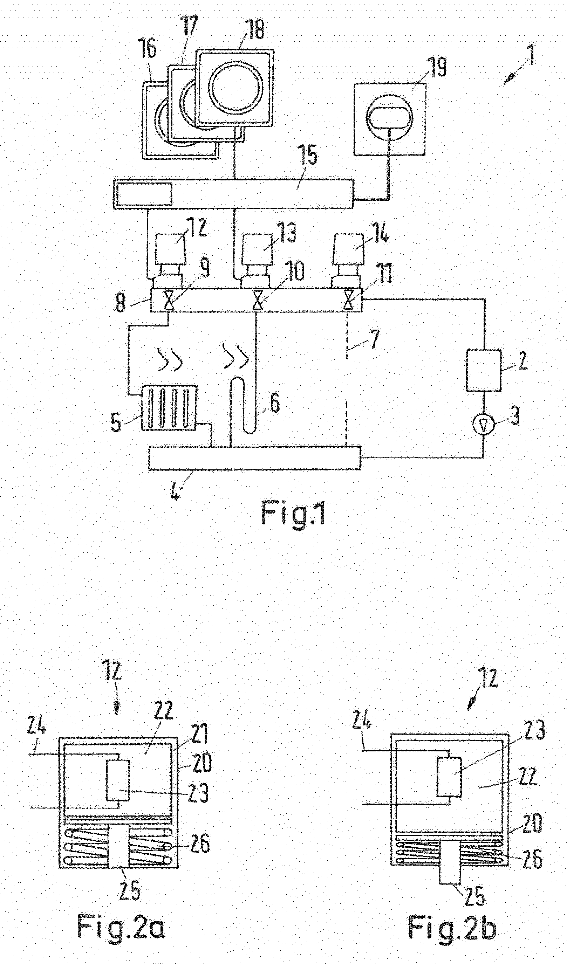

A heating system 1 as schematically shown in Fig. 1 comprises a heat source 2 heating a heat transfer fluid, for example heating water. The heat transfer fluid is pumped by means of circulation pump 3 to a supply manifold 4. A number of heat exchangers in form of a radiator 5, a floor heating means 6 and others 7, for example convector, are connected to the supply manifold 4 and to a return manifold 8. Each of the heat exchanger 5-7 is provided with a valve 9, 10, 11. The valve 9, 10, 11 controls the flow of the heat transfer fluid through the respective heat exchanger 5-7. When the valve 9, 10, 11 is closed, there is no flow of heat transfer fluid through the respective heat exchanger 5, 6, 7. If the valve 9, 10, 11 is fully open, a maximum flow of heat transfer fluid through the respective heat exchanger 5, 6, 7 is possible.

Each valve 9, 10, 11 is actuated by means of actuator means 12, 13, 14 which will be described in more detail in connection with Fig. 2. All actuator means 12, 13, 14 are connected to common control means 15 by wire or wireless. A room thermostat 16, 17, 18 is assigned to each of the heat exchanger 5-7. The room thermostats 16-18 are connected to the common control means 15 by means of a wire or wireless. The control means 15 is connected to a power supply 19.

The valves 9-11 are normally closed valves which are moved in an open condition when the respective actuator means 12-14 is operated.

Fig. 2 shows schematically the construction of the actuator means 12 as an example. The other actuator means 13, 14 have the same construction.

Actuator means 12 has a housing 20 enclosing a closed volume 21 in which a thermally expandable medium 22 is enclosed, such as wax, gas or liquid. The thermally expandable medium 22 changes its volume when the temperature changes. When the temperature increases, the medium 22 increases its volume. When the temperature of the medium 22 decreases, the medium 22 decreases its volume.

The temperature of the thermally expandable medium 22 is adjusted by means of heating means 23 which are positioned in the closed volume 21 and preferably embedded in said medium 22. It is however possible to mount the heating means 23 on the outside of the housing 20. The heating means 23 are in form of a PTC-resistor, i.e. a resistor changing its resistance value when the temperature changes. The relation between temperature and resistance value is known. Therefore, when the electrical resistance value of the heating means 23 is known, the temperature of the heating means 23 is known as well. Since the heating means 23 is embedded in the thermally expandable medium, the temperature of the thermally expandable medium is known as well. There is a unique relation between the temperature of the thermally expandable medium 22 and its volume. Consequently, when the electrical resistance value of the heating means 23 is known, the volume of the thermally expandable medium 22 is known as well.

The heating means 23 has wires 24 which are connected to the control means 15 to receive electrical current and voltage from the control means 15. The control means 15 can measure the current and the voltage applied to the wires 24. Therefore, the control means 15 is able to determine the electrical resistance value of the heating means 23.

Fig. 2a shows the condition of the actuator 12 in a cold state. The thermally expandable medium 22 is cold and has therefore assumed the minimum volume.

The actuator 12 comprises a plunger 25 which is loaded by a spring 26 to be retracted in the housing 20. The plunger 25 is used to actuate the valve 9.

When the thermally expandable medium 22 has its minimum volume, the plunger 25 is fully retracted into housing 20.

Fig. 2b shows the condition when the thermally expandable medium 22 has been heated by means of the heating means 23. The medium 22 has increased its volume. Therefore, the plunger 25 has been shifted out of the housing 20 against the force of the spring 26.

When the electrical resistance value of the heating means 23 is known, the temperature of the heating means 23 and the temperature of the medium 22 is known and consequently the volume and the volume increase is known. Therefore, it can be determined to which extend the plunger 25 has been moved out of the housing. The maximum stroke (100 %) is schematically indicated in Fig. 2b.

The heating means 23 is supplied with electrical energy in a pulse width modulation mode. In this mode electrical energy is supplied within a fraction of a time period only. The relation between this fraction and the overall length of the time period is called duty cycle. This has the advantage, that the electrical resistance value can easily be determined.

As will be described below, the heating means 23 are part of a closed control loop. In this closed control loop the temperature of the heating means 23 can be adjusted with a rather high accuracy. The temperature can be controlled using the electric resistance value of the heating means 23. When the temperature can be adjusted with sufficient accuracy, the stroke of the plunger 25 can be adjusted as well with the same high precision. The period of the above mentioned duty cycle is rather short, for example in the magnitude of 1 second.

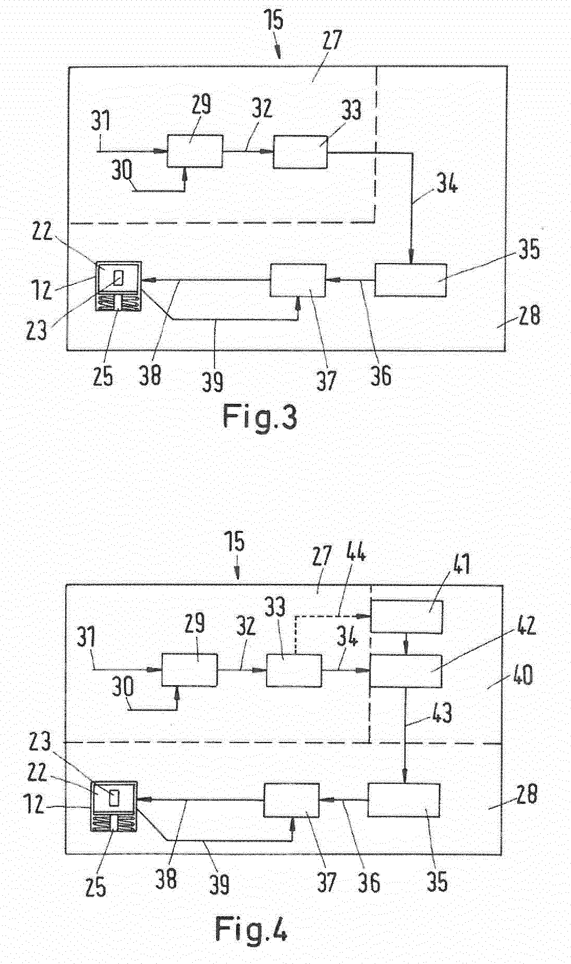

Fig. 3 shows schematically a control means 15 of a first embodiment.

The control means 15 comprise an outer control loop 27 and an inner control loop 28. An actuator 12 is shown within the inner control loop 28 to simplify the description.

The outer control loop 27 comprises a comparator 29. The comparator 29 has a first input 30 to receive a set point, for example a desired room temperature, and a second input 31 for receiving the actual room temperature. The comparator 29 determines a deviation 32 and supplies this deviation 32 to a PI-controller 33. The PI-controller 33 outputs a requested duty cycle 34 for the heating means 23 of the actuator. This requested duty cycle 34 is supplied to an I/O-converter 35 which converts the requested duty cycle 34 into a resistance value 36 forming a set point for a further PI-controller 37. The PI-controller outputs a duty cycle 38 for the heating means 23. The actuator returns a feedback 39 in form of an actual resistance value of the heating means 23 to the PI-controller 37. The only task for the PI-controller 37 is to adjust the duty cycle 38 so that the set point resistance value 36 is met by the feedback 39.

It is therefore possible to control the stroke of the plunger 25 from 0 to 100 % based on the thermal expansion of the medium 22. Control of this stroke is handled indirectly without mechanical or optical feedback. The position of the plunger 25 is determined through measurement of the resistance of the heating means 23, for example the PTC-resistance, which correlates to the media temperature of the medium 22 which correlates to stroke.

The overall temperature control is made by the outer control loop 27. The inner control loop 28 is responsible for adjusting the desired stroke of the actuator 25. The outer control loop 27 can use a pulse width modulation as well, i.e. the actuator allows flow of the heat transfer fluid during a part of a time period. However, this time period is much longer as the time period of the pulse width modulation of the inner control loop 28. When the heat exchanger is a floor heating, the time period of the outer control loop 27 can be in the magnitude of 60 min.

Control means 15 can have the outer loop 27 and the inner loop 28 for each actuator 12.

Fig. 4 shows a further embodiment. The same elements as in Fig. 3 are designated with the same numerals.

In addition to the outer control loop 27 and the inner control loop 28 the control means 15 comprise a further section 40 between the outer control loop 27 and the inner control loop 28.

This further section 40 comprises a statistical filter 41 and a duty cycle limiter 42.

The PI-controller 33 supplies the requested duty cycle 34 not directly to the I/O-converter 35, but to the duty cycle limiter 42 which outputs a limited duty cycle 43 to the I/O-converter 35.

The duty cycle limiter 42 receives control information from the statistical filter 41. The statistical filter 41 receives historical data 44 from the PI-controller 33. In other words, PI-controller 33 informs continuously or from time to time the statistical filter 41 about the actual requested duty cycle 34 so that at the input of the statistical filter 41 a data harvest for a statistical array can be established. The statistical filter 41 can, for example, eliminate unusual situations. The statistical filter 41 can, for example, provide information what signal does a specific actuator normally get, compared to the other actuators or loops, when sorting or deleting the most bizarre values.

When, for example, it is discovered that one of the heat exchangers 5-7 consumes the major part of the heat transfer fluid, the statistical filter 41 can by means of the duty cycle limiter 42 limit the duty cycle for the specific actuator 12-14 so that the maximum flow of heat transfer fluid through this heat exchanger is limited. This limitation is not made mechanically so that the construction of the valve can be kept simple.

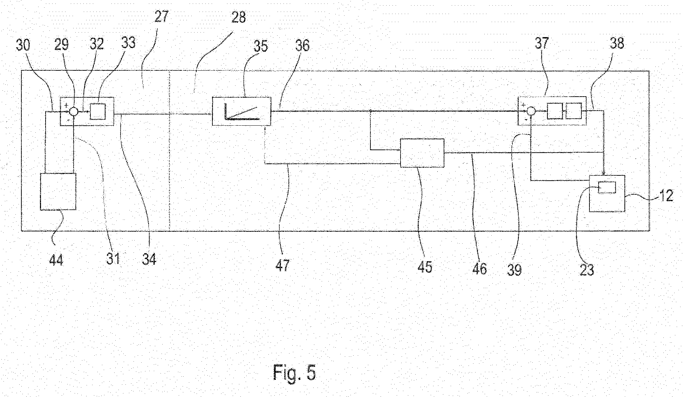

Fig. 5 shows a third embodiment of control means. Like elements as in Fig. 3 and 4 are shown with the same numerals.

The inner control loop 27 is shown with a room thermostat 44. This room thermostat 44 has two functions. It is used to adjust the set point supplied to the first input 30 of the comparator 29. Furthermore, it is used to measure the actual room temperature to be supplied to the second input 31 of the comparator 29.

Furthermore, the inner control loop 28 comprises a duty cycle block 45 which is used to determine the duty cycle 46 of the heat transfer fluid flow, in other words the duty cycle of the valve which is actuated by the actuator means 12. This duty cycle 46 is named "second duty cycle" so that it is possible to distinguish the second duty cycle 46 from the "first" duty cycle 38. The period of the first duty cycle 38 is in the magnitude of 1 second whereas the period of the second duty cycle 46 is in the magnitude of 60 min.

The duty cycle block 45 is used to decrease the second duty cycle when the stroke of the actuator means 12 is too small. In this case the duty cycle block 45 delivers a feed forward signal 47 to the I/O converter 35 which takes into account this feed forward signal 47 when determining the resistance value 36 to be inputted into the PI-controller 37. In a normal heating system, the second duty cycle 46 is about 60 % of a period of typically 60 min. In the prior art systems the valves are hydraulically balanced so that the flow resistance for the flow through each heat exchanger is adapted to the heat demand of this heat exchanger. If the balancing has not been made or not been made correctly, a situation can occur in which a small room having a small heat exchanger with a low flow resistance receives to much heat transfer fluid so that the pump of the heating system is not able to supply sufficient heat transfer fluid to the other heat exchangers.

With the system shown above, a presetting is no longer necessary. Since the stroke of actuator means 12-14 can be adjusted with high accuracy, the control means 15 can adjust the opening degree of each valve 9-11 so that the distribution of the heat transfer fluid to all heat exchanger 5-7 is sufficiently balanced by adjusting the stroke of the actuator means 12. When, for example, three rooms are to be heated, wherein the first room has a heating load of 300 W (at 0°C outside) the second room has a load of 900 W and the third room has a load of 300 W, the stroke of the valve can be adjusted to 0,15 mm for the first room, to 0,45 mm for the second room and to 0,15 mm for the third room. In this case the duty cycle can be chosen to be 80 % of the period.

## Claims

1. Actuator means (12-14) for a heat exchanger valve (5-7), said actuator means (12-14) comprising a thermally expandable medium (22) in a closed volume (21) acting on a plunger (25), heating means (23) for heating said medium (22) and control means (15) controlling said heating means (23), **characterized in that** said heating means (23) has a temperature depending electrical resistance value and said control means (15) uses said resistance value for determining a stroke of said plunger (25).

2. Actuator means according to claim 1, **characterized in that** said heating means (23) is positioned in said closed volume (21).

3. Actuator means according to claim 1 or 2, **characterized in that** said heating means (23) is embedded in said medium (22).

4. Actuator means according to any of claims 1 to 3, **characterized in that** said heating means (23) is a PTC-resistor.

5. Actuator means according to any of claims 1 to 4, **characterized in that** said control means (15) comprise an inner control loop (24) and an outer control loop (27).

6. Actuator means according to claim 5, **characterized in that** at least one of said inner control loop (28) and said outer control loop (27) comprise a PI - controller (33, 37).

7. Actuator means according to any of claims 5 or 6, **characterized in that** said inner control loop (28) controls said heating means (23) by means of pulse width modulation.

8. Heating system (1) comprising a heat source (2) heating a heat transfer fluid, at least one heat exchanger (5-7) connected to said heat source (2), said heat exchanger (5-7) being provided with a valve (9-11) controlling a flow of said heat transfer fluid through said heat exchanger (5-7), said valve (9-11) being actuated by actuator means (12-14) according to any of claims 1 to 7.

9. Heating system according to claim 8, **characterized in that** it comprises at least two heat exchangers (5-7) connected to said heat source (2), each heat exchanger (5-7) being provided with a valve (9-11) actuated by actuator means (12-14) according to any of claims 1 to 7, said actuator means (12-14) having a common control means (15).

10. Heating system according to claim 9, **characterized in that** said control means (15) performs a balancing of said heat exchangers (5-7).

11. Heating system according to claim 10, **characterized in that** said control means (15) comprise for each actuator means (12-14) limitation means (42) for limiting an opening degree of the valve (9-11).

12. Heating system according to claim 11, **characterized in that** said actuator means (12-14) are controlled by pulse width modulation, wherein said limiting means (42) limit a duty cycle.

13. Heating system according to claim 11 or 12, **characterized in that** said limiting means (42) is connected to a statistical filter (41), said statistical filter (41) receiving historical data.

14. Heating system according to claim 13, **characterized in that** said statistical filter (41) receives an input of an outer control loop (28).

## Patentansprüche

1. Betätigungsmittel (12-14) für ein Wärmetauscherventil (5-7), wobei die Betätigungsmittel (12-14) ein thermisch ausdehnbares Medium (22) in einem geschlossenen Volumen (21), das auf einen Kolben (25) wirkt, Heizmittel (23) zum Aufwärmen des Mediums (22) und Steuermittel (15), die die Heizmittel (23) steuern, umfassen, **dadurch gekennzeichnet, dass** die Heizmittel (23) einen temperaturabhängigen elektrischen Widerstandswert besitzen und die Steuermittel (15) den Widerstandswert zum Bestimmen eines Hubs des Kolbens (25) verwenden.

2. Betätigungsmittel nach Anspruch 1, **dadurch gekennzeichnet, dass** die Heizmittel (23) in dem geschlossenen Volumen (21) positioniert sind.

3. Betätigungsmittel nach Anspruch 1 oder 2, **dadurch gekennzeichnet, dass** die Heizmittel (23) in das Medium (22) eingebettet sind.

4. Betätigungsmittel nach einem der Ansprüche 1 bis 3, **dadurch gekennzeichnet, dass** die Heizmittel (23) ein PTC-Widerstand sind.

5. Betätigungsmittel nach einem der Ansprüche 1 bis 4, **dadurch gekennzeichnet, dass** die Steuermittel (15) eine innere Steuerschleife (24) und eine äußere Steuerschleife (27) umfassen.

6. Betätigungsmittel nach Anspruch 5, **dadurch gekennzeichnet, dass** die innere Steuerschleife (28) und/oder die äußere Steuerschleife (27) eine PI-Steuereinheit (33, 37) umfasst.

7. Betätigungsmittel nach einem der Ansprüche 5 oder 6, **dadurch gekennzeichnet, dass** die innere Steuerschleife (28) die Heizmittel (23) mit Hilfe einer Impulsbreitenmodulation steuert.

8. Heizsystem (1), das eine Wärmequelle (2) umfasst, die ein Wärmeübertragungsfluid aufwärmt, wobei mindestens ein Wärmetauscher (5-7) mit der Wärmequelle (2) verbunden ist, wobei der Wärmetauscher (5-7) mit einem Ventil (9-11) ausgestattet ist, das einen Strom des Wärmeübertragungsfluids durch den Wärmetauscher (5-7) steuert, wobei das Ventil (9-11) durch Betätigungsmittel (12-14) nach einem der Ansprüche 1 bis 7 betätigt wird.

9. Heizsystem nach Anspruch 8, **dadurch gekennzeichnet, dass** es mindestens zwei Wärmetauscher (5-7) umfasst, die mit der Wärmequelle (2) verbunden sind, wobei jeder Wärmetauscher (5-7) mit einem Ventil (9-11) ausgestattet ist, das durch Betätigungsmittel (12-14) nach einem der Ansprüche 1 bis 7 betätigt wird, wobei die Betätigungsmittel (12-14) gemeinsame Steuermittel (15) besitzen.

10. Heizsystem nach Anspruch 9, **dadurch gekennzeichnet, dass** die Steuermittel (15) ein Ausgleichen der Wärmetauscher (5-7) ausführen.

11. Heizsystem nach Anspruch 10, **dadurch gekennzeichnet, dass** die Steuermittel (15) für alle Betätigungsmittel (12-14) Begrenzungsmittel (42) umfassen, um einen Öffnungsgrad des Ventils (9-11) zu begrenzen.

12. Heizsystem nach Anspruch 11, **dadurch gekennzeichnet, dass** die Betätigungsmittel (12-14) durch eine Impulsbreitenmodulation gesteuert werden, wobei die Begrenzungsmittel (42) einen Arbeitszyklus begrenzen.

13. Heizsystem nach Anspruch 11 oder 12, **dadurch gekennzeichnet, dass** die Begrenzungsmittel (42) mit einem statistischen Filter (41) verbunden sind, wobei das statistische Filter (41) Entwicklungsdaten empfängt.

14. Heizsystem nach Anspruch 13, **dadurch gekennzeichnet, dass** das statistische Filter (41) eine Eingabe einer äußeren Steuerschleife (28) empfängt.

## Revendications

1. Moyen d'actionnement (12-14) pour une soupape d'échangeur de chaleur (5-7), ledit moyen d'actionnement (12-14) comprenant un milieu dilatable thermiquement dans un volume fermé (21) agissant sur un piston plongeur (25), un moyen de chauffage (23) pour chauffer ledit milieu (22) et un moyen de commande (15) commandant ledit moyen de chauffage (23), **caractérisé en ce que** ledit moyen de chauffage (23) a une valeur de résistance électrique dépendant de la température et ledit moyen de commande (15) utilise ladite valeur de résistance pour déterminer une course dudit piston plongeur (25).

2. Moyen d'actionnement selon la revendication 1, **caractérisé en ce que** ledit moyen de chauffage (23) est positionné dans ledit volume fermé (21).

3. Moyen d'actionnement selon la revendication 1 ou 2, **caractérisé en ce que** ledit moyen de chauffage (23) est incorporé dans ledit milieu (22).

4. Moyen d'actionnement selon l'une quelconque des revendications 1 à 3, **caractérisé en ce que** ledit moyen de chauffage (23) est une résistance à coefficient de température positif.

5. Moyen d'actionnement selon l'une quelconque des revendications 1 à 4, **caractérisé en ce que** ledit moyen de commande (15) comprend une boucle de commande interne (24) et une boucle de commande externe (27).

6. Moyen d'actionnement selon la revendication 5, **caractérisé en ce qu'**au moins soit ladite boucle de commande interne, soit ladite boucle de commande externe (27) comprend un régulateur PI (33, 37).

7. Moyen d'actionnement selon l'une quelconque des revendications 5 ou 6, **caractérisé en ce que** ladite boucle de commande interne (28) commande ledit moyen de chauffage (23) au moyen d'une modulation d'impulsions en durée.

8. Système de chauffage (1) comprenant une source de chaleur (2) chauffant un fluide de transfert de chaleur, au moins un échangeur de chaleur (5-7) raccordé à ladite source de chaleur (2), ledit échangeur de chaleur (5-7) étant pourvu d'une soupape (9-11) contrôlant un écoulement dudit fluide de transfert de chaleur à travers ledit échangeur de chaleur (5-7), ladite soupape (9-11) étant actionnée par le moyen d'actionnement (12-14) selon l'une quelconque des revendications 1 à 7.

9. Système de chauffage selon la revendication 8, **caractérisé en ce qu'**il comprend au moins deux échangeurs de chaleur (5-7) raccordés à ladite source de chaleur (2), chaque échangeur de chaleur (5-7) étant pourvu d'une soupape (9-11) actionnée par le moyen d'actionnement (12-14) selon l'une quelconque des revendications 1 à 7, ledit moyen d'actionnement (12-14) ayant un moyen de commande commun (15).

10. Système de chauffage selon la revendication 9, **caractérisé en ce que** ledit moyen de commande (15) exécute un équilibrage desdits échangeurs de chaleur (5-7).

11. Système de chauffage selon la revendication 10, **caractérisé en ce que** ledit moyen de commande (15) comprend pour chaque moyen d'actionnement (12-14) un moyen de limitation (42) pour limiter un degré d'ouverture de la soupape (9-11).

12. Système de chauffage selon la revendication 11, **caractérisé en ce que** ledit moyen d'actionnement (12-14) est commandé par modulation d'impulsions en durée, ledit moyen de limitation (42) limitant un facteur d'utilisation.

13. Système de chauffage selon la revendication 11 ou 12, **caractérisé en ce que** ledit moyen de limitation (42) est connecté à un filtre statistique (41), ledit filtre statistique (41) recevant des données historiques.

14. Système de chauffage selon la revendication 13, **caractérisé en ce que** ledit filtre statistique (41) reçoit une entrée d'une boucle de commande externe (28).
